# EUROPÄISCHE PATENTANMELDUNG

(11) **EP 1 221 423 A1**
(43) Veröffentlichungstag der Anmeldung: **10.07.2002**
(21) Anmeldenummer: 01100433.0
(22) Anmeldetag: 08.01.2001
(51) Int. Cl.: B65H 54/72, B65H 54/28, H05K 7/20, H02K 11/00

(54) **Fadenverlegung für eine Vorrichtung zum Aufwickeln eines Fadens auf eine Spule**

(71) Anmelder: Schärer Schweiter Mettler AG, 8812 Horgen (CH)
(72) Erfinder: SCHAAD, Marc, 5600 Lenzburg (CH)
(74) Vertreter: Dittrich, Horst, Dr.

(57) **Zusammenfassung**

Die Fadenverlegung enthält einen Fadenführer, der mit einem flexiblen Changierelement verbunden ist, ein von einem Motor antreibbares Treibrad für das Changierelement und eine Steuerelektronik. Am Motor (5) ist eine Kühlfläche (11) angebracht und die Steuerelektronik ist auf dieser Kühlfläche (11) angeordnet. Die Kühlfläche (11) ist an dem vom Treibrad abgewandten Ende des Motors (5) angeordnet. Die Steuerelektronik ist auf einer Platine montiert, die in einem auf der Kühlfläche (11) gehaltenen Gehäuse (12, 13) angeordnet ist.

## Beschreibung

Die vorliegende Erfindung betrifft eine Fadenverlegung für eine Vorrichtung zum Aufwickeln eines Fadens auf eine Spule, mit einem Fadenführer, der mit einem flexiblen Changierelement verbunden ist, mit einem von einem Motor antreibbaren Treibrad für das Changierelement und mit einer Steuerelektronik.

Bei einer in der EP-A-0 829 444 beschriebenen Fadenverlegung dieser Art, bei welcher das Changierelement durch ein Drahtseil, eine Saite oder einen Riemen gebildet ist, ist das Treibrad auf einer von Biegeträgern getragenen Spannplatte angeordnet, auf welcher auch der Antriebsmotor des Treibrads gelagert ist. Die Spannplatte wirkt einerseits als Vorspannorgan für das Changierelement und andererseits als Kühlfläche des Motors. Wie der mit der EP-A-0 829 444 korrespondierenden US-A-5 918 829 zu entnehmen ist, ist auf der Motorwelle an der vom Treibrad abgewandten Seite des Motors eine Encoderscheibe angeordnet, welche als Geber für die Überwachung der Changierbewegung des Fadenführers durch einen Sensor dient. Die Signale dieses Sensors sind einer Steuerung zugeführt, welche überprüft, ob der Motor mit der für die jeweilige Position des Fadenführers vorgesehenen Drehzahl läuft und bei einer Abweichung zwischen Ist- und Sollwert ein entsprechendes Regelsignal an den Motor abgibt. Die Steuerung selbst ist in einigem Abstand von Motor und Sensor an einer geschützten Stelle der Spulstation angeordnet.

Dieses bekannte Fadenverlegesystem hat sich in der Praxis so gut bewährt, dass der Wunsch besteht, Spulstellen bestehender Maschinen, beispielsweise von OE-Spinnmaschinen, mit solchen Fadenverlegungen auszurüsten oder nachträglich auf diese umzurüsten, was jedoch oftmals daran scheitert oder zumindest dadurch erschwert wird, dass das Fadenverlegesystem konstruktiv und elektrisch nur sehr schwer in bestehende Maschinen integrierbar ist. Dadurch können unerwünschte zusätzliche Aufwendungen erforderlich werden und/oder Zusatzkosten entstehen.

Durch die Erfindung soll nun eine Fadenverlegung der eingangs genannten Art angegeben werden, welche nachträglich einfach in bestehende Maschinen eingepasst werden kann, ohne dass dabei merkliche Zusatzkosten entstehen oder aufwendige zusätzliche Massnahmen erforderlich werden.

Diese Aufgabe wird erfindungsgemäss dadurch gelöst, dass am Motor eine Kühlfläche angebracht und dass die Steuerelektronik auf dieser Kühlfläche angeordnet ist. Vorzugsweise ist die Kühlfläche an dem vom Treibrad abgewandten Ende des Motors angeordnet.

Eine erste bevorzugte Ausführungsform der erfindungsgemässen Fadenverlegung ist dadurch gekennzeichnet, dass die Steuerelektronik auf einer Platine montiert und diese Platine in einem auf der Kühlfläche gehaltenen Gehäuse angeordnet ist.

Durch die erfindungsgemässe Anordnung der Steuerelektronik auf der Kühlfläche des Motors ergibt sich als Hauptvorteil, dass zwischen dem Motor und der Steuerelektronik keine Verkabelung erforderlich ist, wodurch die Anforderungen an die elektromagnetische Verträglichkeit reduziert und gleichzeitig die Kosten gesenkt werden. Wenn ein Sensor zur Überwachung der Position des Treibrads verwendet wird, dann kann dieser auf der die Steuerelektronik tragenden Platine angeordnet werden, wodurch für diesen Sensor kein Kabel und kein zusätzliches Gehäuse notwendig ist.

Eine zweite bevorzugte Ausführungsform der erfindungsgemässen Einrichtung ist dadurch gekennzeichnet, dass die Kühlfläche durch eine Blechplatte gebildet ist.

Eine dritte bevorzugte Ausführungsform der erfindungsgemässen Fadenverlegung ist dadurch gekennzeichnet, dass das Treibrad auf der Motorwelle angeordnet und dass auf dem vom Treibrad abgewandten Ende der Motorwelle eine Encoderscheibe befestigt ist, welche als Signalgeber für einen Sensor zu Überwachung der momentanen Drehposition des Treibrads dient.

Eine vierte bevorzugte Ausführungsform der erfindungsgemässen Fadenverlegung ist dadurch gekennzeichnet, dass der Sensor auf der genannten Platine befestigt ist.

Eine fünfte bevorzugte Ausführungsform ist dadurch gekennzeichnet, dass das genannte Gehäuse auf der Kühlfläche staub- und flüssigkeitsdicht angeordnet ist. Die staub- und flüssigkeitsdichte Ausbildung des die Platine mit der Steuerelektronik und dem Sensor enthaltenden Gehäuses bietet einen optimalen Schutz für die Steuerelektronik und die Sensorik.

Eine weitere bevorzugte Ausführungsform der erfindungsgemässen Einrichtung ist dadurch gekennzeichnet, dass das Gehäuse eine elektromagnetische Abschirmung für die Steuerelektronik und die Sensorik bildet.

Nachfolgend wird die Erfindung anhand von Ausführungsbeispielen und der Zeichnungen näher erläutert; es zeigt:
Fig. 1 eine Ansicht der die Fadenverlegung tragenden Platte von hinten,
Fig. 2 einen Schnitt nach der Linie II-II von Fig. 1; und
Fig. 3 eine perspektivische Darstellung des die Steuerelektronik enthaltenden Gehäuses.

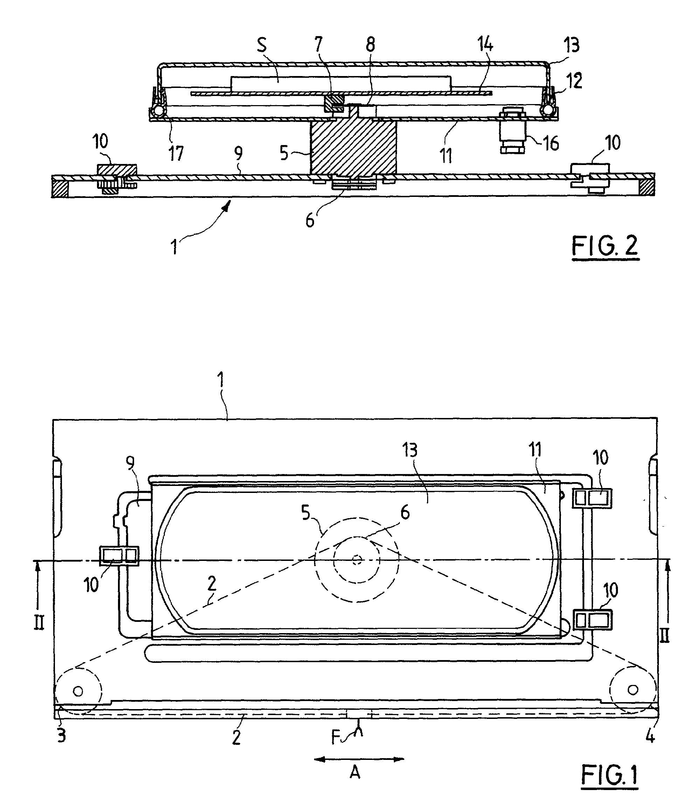

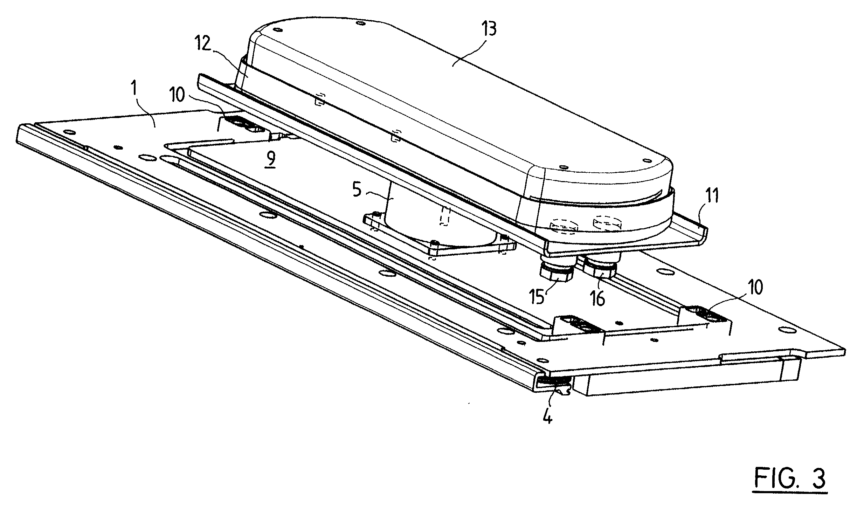

Die in den Figuren 1 bis 3 dargestellte Fadenverlegung entspricht weitgehend der in der EP-A-0 929 444 oder in der EP-A-0 453 622 beschriebenen. Wie diesen Dokumenten, auf welche hiermit ausdrücklich Bezug genommen wird, entnommen werden kann, sind alle wesentlichen Komponenten der Fadenverlegung auf einer Grundplatte 1 aufgebaut. Diese wesentlichen Elemente sind ein Fadenführer F der auf einem Changierelement 2 befestigt ist, sowie der Antrieb und die Führung des Changierelements 2.

Der Fadenführer F ist durch das Changierelement 2 in Richtung des Pfeils A oszillierend angetrieben. Das Changierelement 2 ist als flexibles und in Changierrichtung A steifes Organ zur Übertragung von Zugkräften ausgebildet und beispielsweise durch eine Saite, einen Draht, ein Metallseil, einen Flach-, Zahn- oder Keilriemen, ein Metallband, eine Kette oder dergleichen gebildet. Das Changierelement 2 läuft über zwei auf der Grundplatte 1 gelagerte Umlenkrollen 3 und 4 und über ein von einem Servomotor 5, vorzugsweise eine Schrittmotor, antreibbares Treibrad 6. Das Changierelement 2 umschlingt das Treibrad 6 mit mehreren Windungen und ist mit beiden Enden an diesem befestigt.

Dem Motor 5 ist ein Sensor 7 zur Detektion der Drehposition des Treibrades 6 und damit der Changierposition des Fadenführers zugeordnet. Der Sensor 7 ist ein aus einer Sende- und einer Empfangsdiode bestehender fotoelektrischer Sensor, der die Bewegung einer mit dem Treibrad 6 starr verbundenen Scheibe 8 abtastet. Die Scheibe 8 ist zu diesem Zweck mit geeigneten optisch abtastbaren Markierungen, beispielsweise mit entlang eines Kreises angeordneten Löchern oder Schlitzen, versehen. Das Sensorsignal wird einer Steuerung zugeführt, die überprüft, ob der Motor 5 mit der für die jeweilige Position des Fadenführers vorgesehenen Drehzahl läuft. Bei Abweichungen zwischen Ist- und Sollwert gibt die Steuerung ein entsprechendes Regelsignal an den Motor 5 ab.

Der den Motor 5 und das Treibrad 6 tragende zentrale Bereich der Grundplatte 1 ist als federnde Spannplatte 9 ausgebildet, welche über Biegeträger mit dem Randbereich der Grundplatte 1 verbunden ist (siehe dazu EP-A-0 829 444). Zwischen dem genannten Randbereich und der Spannplatte 9 sind elastische, gelenkartige Klammern 10 vorgesehen, die zur Begrenzung der Relativbewegungen zwischen Spannplatte 9 und Grundplatte 1 dienen. Die federnde Wirkung der Spannplatte 9 wird dazu verwendet, dynamische Veränderungen des vorzugswei-se durch ein Stahlseil gebildeten Changierelements 2 im Bereich der Bewegungsumkehrpunkte zu kompensieren. Wenn der Fadenführer F an einen Umkehrpunkt gelangt, dann verhalten sich die beiden an den Fadenführer anschliessenden Trume des Changierelements 2 verschieden, indem in der Abbremsphase das in Bewegungsrichtung vordere Trum gelockert und das in Bewegungsrichtung hintere Trum gedehnt und in der Beschleunigungsphase das in Bewegungsrichtung vordere Trum des Changierelements 2 gedehnt und das hintere gelockert wird.

Dieses dynamische Verhalten des Changierelements 2 beschränkt die Positioniergenauigkeit des Fadenführers F bei einer gegebenen Beschleunigung oder Verzögerung und damit die Changiergeschwindigkeit des Fadenführers F bei einer vorgegebenen Positioniergenauigkeit. Da die Anforderungen an die Positioniergenauigkeit des Fadenführers schon bei Kreuzspulen sehr hoch sind und für Wicklungen nach beliebigen Wickelgesetzen noch steigen, würde das erwähnte dynamische Verhalten des Changierelements 2 die Changiergeschwindigkeit und damit die Spulgeschwindigkeit merklich begrenzen.

Durch die beschriebene Lagerung des Motors 5 und des Treibrades 6 an der relativ zu den Umlenkrollen 3 und 4 federnden Spannplatte 9, wirkt das Treibrad 6 auf das Changierelement 2 wie ein Vorspannorgan, das seitlich gegen das Changierelement drückt und Schwankungen von dessen Spannungen ausgleicht. Da jedes Trum des Changierelements 2 vom Fadenführer F zum Treibrad 6 geführt ist, wirkt dieses federnde Vorspannorgan gleichzeitig auf beide Trume des Changierelements 2 und verhindert dadurch in der Beschleunigungs- und in der Verzögerungsphase sowohl ein Lockern des einen als auch eine Überdehnung des anderen Trums des Changierelements.

Zur Abführung der beim Betrieb des Motors 5 entstehenden Wärme ist auf dem Motor, und zwar an dessen vom Treibrad 6 abgewandter, die Encoderscheibe 8 tragenden Stirnseite, ein Kühlblech 11 befestigt, welches darstellungsgemäss durch eine flache rechteckige Platte mit umgebördelten Längsrändern gebildet ist. Auf dem Kühlblech 11 ist ein aus einem Boden 12 und einem Deckel 13 bestehendes Gehäuse angeordnet, in welches eine die Steuerelektronik S des Motors 5 und den Sensor 7 tragende Platine (Leiterplatte) 14 integriert ist. Ausserdem sind am Kühlblech 11 zwei Kabelanschlüsse 15 und 16 befestigt, von denen der eine zum Anschluss eines Stromversorgungskabels und der andere zum Anschluss eines Verbindungskabels zur Maschinensteuerung vorgesehen ist. Das Gehäuse 12, 13 ist durch eine Dichtung 17 gegenüber dem Kühlblech 11 staub- und wasserdicht abgedichtet.

Die Anordnung des Gehäuses 12, 13 mit der die Steuerelektronik S tragenden Platine 14 auf dem Kühlblech 11 hat den Vorteil, dass zwischen dem Motor 5 und der Steuerelektronik S keine Verkabelung erforderlich ist, wodurch die Anforderungen an die elektromagnetische Verträglichkeit (Störaussendung und Störfestigkeit) reduziert und gleichzeitig die Kosten gesenkt werden. Auch für den auf der Platine 14 angeordneten Sensor 7 entfällt die Verkabelung und es ist ausserdem kein zusätzliches Gehäuse für den Sensor notwendig. Die staub- und flüssigkeitsdichte Ausbildung des die Platine 14 mit der Steuerelektronik und dem Sensor 7 enthaltenden Gehäuses 12, 13 bietet einen optimalen Schutz für die Steuerelektronik und die Sensorik.

## Patentansprüche

1. Fadenverlegung für eine Vorrichtung zum Aufwickeln eines Fadens auf eine Spule, mit einem Fadenführer (F), der mit einem flexiblen Changierelement (2) verbunden ist, mit einem von einem Motor (5) antreibbaren Treibrad (6) für das Changierelement (2) und mit einer Steuerelektronik, **dadurch gekennzeichnet, dass** am Motor (5) eine Kühlfläche (11) angebracht und die Steuerelektronik (S) auf dieser Kühlfläche (11) angeordnet ist.

2. Fadenverlegung nach Anspruch 1, **dadurch gekennzeichnet, dass** die Kühlfläche (11) an dem vom Treibrad (6) abgewandten Ende des Motors (5) angeordnet ist.

3. Fadenverlegung nach Anspruch 2, **dadurch gekennzeichnet, dass** die Steuerelektronik (S) auf einer Platine (14) montiert und diese Platine (14) in einem auf der Kühlfläche (11) gehaltenen Gehäuse (12, 13) angeordnet ist.

4. Fadenverlegung nach einem der Ansprüche 1 bis 3, **dadurch gekennzeichnet, dass** die Kühlfläche (11) durch eine Blechplatte gebildet ist.

5. Fadenverlegung nach einem der Ansprüche 1 bis 4, **dadurch gekennzeichnet, dass** das Treibrad (6) auf der Motorwelle angeordnet und der Motor (5) auf einer Platte (9) befestigt ist, und dass auf dem vom Treibrad abgewandten Ende der Motorwelle eine Encoderscheibe (8) angeordnet ist, welche als Signalgeber für einen Sensor (7) zur Überwachung der momentanen Drehposition des Treibrads (6) dient.

6. Fadenverlegung nach den Ansprüchen 3 und 5, **dadurch gekennzeichnet, dass** der Sensor (7) auf der genannten Platine (14) befestigt ist.

7. Fadenverlegung nach einem der Ansprüche 3 bis 7, **dadurch gekennzeichnet, dass** das genannte Gehäuse (12, 13) auf der Kühlfläche (11) staub- und flüssigkeitsdicht angeordnet ist.

8. Fadenverlegung nach Anspruch 7, **dadurch gekennzeichnet, dass** das Gehäuse (12, 13) eine elektromagnetische Abschirmung für die Steuerelektronik (S) und die Sensorik (7, 8) bildet.
